# EUROPÄISCHE PATENTSCHRIFT

(11) **EP 3 107 029 B1**
(45) Veröffentlichungstag und Bekanntmachung des Hinweises auf die Patenterteilung: **23.05.2018**
(21) Anmeldenummer: 16174622.7
(22) Anmeldetag: 15.06.2016
(51) Int. Cl.: G06F 21/64, G06F 21/32, H04L 29/06, H04L 9/32

(54) **VERFAHREN UND VORRICHTUNG ZUM PERSONALISIERTEN ELEKTRONISCHEN SIGNIEREN EINES DOKUMENTS UND COMPUTERPROGRAMMPRODUKT**
METHOD AND DEVICE FOR CUSTOMIZED ELECTRONICALLY SIGNING OF A DOCUMENT, AND COMPUTER PROGRAM PRODUCT
PROCEDE ET DISPOSITIF DE SIGNATURE ELECTRONIQUE PERSONNALISEE D'UN DOCUMENT ET PRODUIT-PROGRAMME D'ORDINATEUR

(30) Priorität: 16.06.2015 DE 102015109607
(43) Veröffentlichungstag der Anmeldung: 21.12.2016
(73) Patentinhaber: Bundesdruckerei GmbH, 10969 Berlin (DE); Identity Trust Management AG, 40231 Düsseldorf (DE)
(72) Erfinder: Selhorst, Marcel, 12163 Berlin (DE); Entschew, Enrico, 12435 Berlin (DE); Bühler, Gregor, 13467 Berlin (DE); Feldmann, Jan Philipp, 45721 Haltern am See (DE); Brose, Ference, 10439 Berlin (DE); Krause, Philipp, 10115 Berlin (DE)
(74) Vertreter: Bittner, Thomas L.

(56) Entgegenhaltungen:
- US-A1- 2003 105 966
- US-A1- 2008 209 516
- US-A1- 2014 354 758
- US-B1- 8 924 729

## Beschreibung

Die Erfindung betrifft ein Verfahren und eine Vorrichtung zum personalisierten elektronischen Signieren eines Dokuments sowie ein Computerprogrammprodukt.

### Hintergrund

Eine elektronische Signatur bezieht sich auf mit elektronischen Informationen verknüpfte Daten, mit denen ein Unterzeichner bzw. Signaturhersteller identifiziert wird und die Integrität der signierten elektronischen Informationen geprüft werden kann. Beispielsweise handelt es sich bei den elektronischen Informationen um Dokumente, zum Beispiel eine Vereinbarung oder einen Vertrag. Die elektronische Signatur erfüllt somit technisch gesehen den gleichen Zweck wie eine eigenhändige Unterschrift auf einem Papierdokument.

Elektronische Signaturen können in verschiedenen Formen vorliegen. Um gesetzlichen Anforderungen zu genügen, kann vorgesehen sein, dass eine qualifizierte elektronische Signatur verwendet werden muss. Eine solche Signatur muss mit einem einmaligen Signaturschlüssel und mit Mitteln, die unter der alleinigen Kontrolle des Signaturherstellers stehen, erstellt worden sein. Zusätzlich muss der Signaturhersteller bei Bedarf identifizierbar sein. Dies erfolgt beispielsweise entweder über einen dem Signaturhersteller zugewiesenen Prüfschlüssel oder gegebenenfalls mittels während der Signaturherstellung erfasster biometrischer Unterschriften. Weiterhin muss die qualifizierte elektronische Signatur auf einem zum Zeitpunkt ihrer Erstellung gültigen qualifizierten Zertifikat beruhen und mit einer sicheren Signaturerstellungseinheit (SSEE) erstellt worden sein. Der Signaturschlüssel darf hierbei ausschließlich in der SSEE gespeichert und angewendet werden. Diese Anforderungen erfüllen regelmäßig zertifizierte Trustcenter für elektronische Signaturen.

Die elektronische Signatur kann in Verbindung mit unterschiedlichen Anwendungen zum Einsatz kommen, die das Unterzeichnen einer Vereinbarung oder eines Vertrages erfordern, der zum Beispiel zwischen einem Dienstleister und einem Kunden oder Nutzer zu schließen ist. Beispiele hierfür sind der Online-Kauf oder auch das Eröffnen eines Bankkontos oder eines Wertpapierdepots. In diesem Zusammenhang ist es üblich, dass zunächst eine Personenidentifizierung stattfindet. Dieses kann unter Verwendung von schriftlichen Unterlagen (zum Beispiel Postident) oder unter Verwendung einer elektronischen Personenidentifikation erfolgen.

Dokument US 2008 / 0209516 A1 betrifft ein System und ein Verfahren zum personalisierten Signieren eines Dokuments. Die Verifikation oder Authentifikation der Signatur erfolgt durch einen autorisierten Dritten, üblicherweise einen öffentlichen Notar, wobei via Videokonferenz eine papierlose Dokumentenplattform genutzt wird. Das bekannte Verfahren soll insbesondere für elektronische Transaktionen geeignet sein, die traditionell eine Authentifikation oder eine notarielle Beglaubigung in Person eines Notars verlangen. Das Videokonferenzsystem wird hierbei genutzt, um die Beteiligten im Rahmen der Videokonferenz zusammenzuschalten.

Aus dem Dokument US 2003 / 0105966 A1 ist ein Verfahren zum personalisierten elektronischen Signieren eines Dokuments bekannt. Hierbei ist vorgesehen, von einer Datenverarbeitungseinrichtung eines Dienstleisters einen elektronischen Vertrag an eine Datenverarbeitungseinrichtung eines Nutzers zu übersenden, sodass der Vertrag vom Nutzer geprüft werden kann. Zur Personenidentifizierung werden biometrische Daten erfasst, die zusammen mit dem elektronischen Vertrag von der Datenverarbeitungseinrichtung des Nutzers an eine weitere Datenverarbeitungseinrichtung (authentication server) übermittelt werden, um dort eine Personenidentifizierung auszuführen. Wenn diese erfolgreich ist, wird der elektronische Vertrag signiert, um ihn dann wahlweise an die Datenverarbeitungseinrichtung des Dienstleisters, von wo der elektronische Vertrag ursprünglich stammt, zu übermitteln.

### Zusammenfassung

Aufgabe der Erfindung ist es, ein Verfahren und eine Vorrichtung zum personalisierten elektronischen Signieren eines Dokuments anzugeben, die flexibel an unterschiedliche Anwendungsaufgaben anpassbar sind.

Zur Lösung sind ein Verfahren und eine Vorrichtung zum personalisierten elektronischen Signieren eines Dokuments nach dem unabhängigen Anspruch 1 und 10 geschaffen. Weiterhin ist ein Computerprogrammprodukt nach dem unabhängigen Anspruch 11 geschaffen. Ausgestaltungen sind Gegenstand von abhängigen Unteransprüchen.

Die Ausführung oder Nutzung der Applikationen erfolgt im Rahmen ein- und derselben dem Nutzer zugeordneten Session (Nutzer-Session). Die Nutzer-Session kann beginnen als Reaktion auf den Empfang einer Nutzereingabe auf einer Webseite des Dienstleisters. Eine solche Nutzereingabc kann sich beispielsweise auf die Anforderung eines Online-Kaufs oder zum Eröffnen eines Bankkontos beziehen. Grundsätzlich kann die Nutzereingabe einen beliebigen Vorgang betreffen, der in Verbindung mit dem elektronischen Signieren eines Dokuments steht, beispielsweise einer Vereinbarung oder eines Vertrags.

Die Applikationen können einzeln oder alle als eine Web-Applikation ausgeführt werden, bei denen der Austausch von Webseiten im Rahmen der Applikation stattfindet.

In dem System von Datenverarbeitungseinrichtungen kann ein Client-Server System implementiert sein, beispielsweise derart, dass auf der Datenverarbeitungseinrichtung des Nutzers ein Browserclient in die Applikationen eingebunden ist. Die Dienstleister-Applikation, die Personenidentifizierungs-Applikation und / oder die Signatur-Applikation können wenigstens teilweise auf einer zugeordneten Servereinrichtung ausgeführt werden.

Das Ausführen des elektronischen Signaturprozesses kann in der Datenverarbeitungseinrichtung des Trustcenters die folgenden Schritte aufweisen: Bereitstellen des elektronischen Zertifikats als ein digitales Zertifikat für ein digitales Signieren und digitales Signieren des Dokuments mit dem digitalen Zertifikat. Mit Hilfe des digitalen Zertifikats ist eine asymmetrische Verschlüsselung ermöglicht. Mit Hilfe der digitalen Signatur können die Erfordernisse einer qualifizierten elektronischen Signatur erfüllt werden.

Die Nutzerdaten können von der Datenverarbeitungseinrichtung des Dienstleisters können an die Datenverarbeitungseinrichtung des Trustcenters und / oder die Datenverarbeitungseinrichtung der Personen-Identifizierungsstelle übertragen werden. Die Nutzerdaten können dann im Rahmen der Personenidentifizierungs-Applikation und / oder der Signatur-Applikation lokal in der jeweiligen Datenverarbeitungseinrichtung verwendet werden.

Als Reaktion auf einen Applikationsaufruf kann die Personenidentifizierungs-Applikation aus der Dienstleister-Applikation heraus aufgerufen werden. Die Personenidentifizierungs-Applikation kann aus der Dienstleister-Applikation als Reaktion auf eine Benutzereingabe aufgerufen werden. Das Aufrufen der Personenidentifizierungs-Applikation aus der Dienstleister-Applikation heraus kann erfolgen, bevor die Signatur-Applikation aufgerufen wird.

Als Reaktion auf einen Applikationsaufruf kann die Signatur-Applikation aus der Dienstleister-Applikation heraus aufgerufen werden. Die Signatur-Applikation kann als Reaktion auf eine Benutzereingabe aus der Dienstleister-Applikation heraus aufgerufen werden. Das Aufrufen der Signatur-Applikation kann erfolgen, bevor aus der Dienstleister-Applikation ein Aufruf der Personenidentifizierungs-Applikation stattfindet.

Als Reaktion auf einen Applikationsaufruf kann die Personenidentifizierungs-Applikation aus der Signatur-Applikation heraus aufgerufen werden. Das Aufbauen der Videokonferenz-Verbindung kann unmittelbar als Reaktion auf den Aufruf oder den Start der Signatur-Applikation erfolgen. Auf diese Weise kann die Videokonferenz-Verbindung in Echtzeit auf den Aufruf oder den Start der Signatur-Applikation bereitgestellt werden. Bei einer Ausführung erfolgt aus der Dienstleister-Applikation eine Umleitung des Nutzers zum elektronischen Signaturprozess, also zur Signatur-Applikation. Aus der Signatur-Applikation heraus kann dann der Personenidentifizierungsprozess mittels der Personenidentifizierungs-Applikation initiiert werden. Wenn denn die Personenidentifikation erfolgreich abgeschlossen ist, kann in einer Ausgestaltung die Signatur-Applikation fortgeführt und beendet werden. Hierbei können zwischen den Applikationen in Verbindung mit den verschiedenen Aufrufen Nutzerdaten übergeben werden, die dann in der jeweils aufgerufenen Applikation bei deren Ausführung ausgewertet werden.

Als Reaktion auf einen Applikationsaufruf kann die Signatur-Applikation aus der Personenidentifizierungs-Applikation heraus aufgerufen werden. Es kann vorgesehen sein, dass die Signatur-Applikation noch während des Ablaufs der Personenidentifizierungs-Applikation oder nach deren erfolgreichem Abschluss (erfolgreich Personenidentifizierung) aufgerufen wird. Bereits während der Personenidentifizierungs-Applikation, insbesondere bei deren Start, kann die Signatur-Applikation aufgerufen werden, so dass im Rahmen der Signatur-Applikation schon ein elektronisches Zertifikat erzeugt wird. Dieses elektronische Zertifikat kann dann, wenn die Personenidentifizierung erfolgreich abgeschlossen ist, zum elektronischen Signieren verwendet werden.

Der elektronische Signaturprozess kann gestartet werden während die Videokonferenz-Verbindung besteht.

Das elektronisch zu signierende Dokument kann dem Nutzer über eine Anzeigeeinrichtung der Datenverarbeitungseinrichtung des Nutzers ausgegeben werden, wobei das Ausgeben durch die Signatur-Applikation und / oder die Personenidentifizierungs-Applikation veranlasst wird. Ergänzend kann ein Ausgeben des zu signierenden Dokumentes im Rahmen der Dienstleister-Applikation erfolgen.

Im Rahmen der Personenidentifizierungs-Applikation können Identifizierungsdaten bereitgestellt und an die Dienstleister-Applikation und / oder die Signatur-Applikation übergeben werden. Die Identifizierungsdaten können teilweise mit dem im Rahmen der Dienstleister-Applikation erfassten Nutzerdaten übereinstimmen.

Eine dem System von Datenverarbeitungseinrichtungen eindeutige Session-Identifikation kann für eine dem Nutzer zugeordnete personenbezogene Session erzeugt werden und beim die Session betreffenden Datenaustausch zwischen den Datenverarbeitungseinrichtungen im Rahmen der Applikationen mitgegeben werden, um eine Zugehörigkeit der ausgetauschten Daten zu der personenbezogenen Session anzuzeigen und überprüfbar zu machen. Die Session-Identifikation kann zum Management der Zustandslosigkeit des HTTP-Protokolls verwendet werden. Auf diese Weise ist es den verschiedenen Applikationen ermöglicht, eingehende Webseiten der personenbezogenen Session (Nutzer-Session) zuzuordnen. Das Erzeugen der Session-Identifikation kann im Rahmen der Dienstleister-Applikation in der Datenverarbeitungseinrichtung des Dienstleisters erfolgen.

Im Zusammenhang mit der Vorrichtung zum personalisierten elektronischen Signieren eines Dokumentes können die vorangehend in Verbindung mit dem Verfahren erläuterten Ausgestaltungen einzeln oder in beliebiger Kombination entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung eines Systems von Datenverarbeitungseinrichtungen, welches mittels von hierauf geladenen und ausgeführten Applikationen eingerichtet ist für ein personalisiertes elektronisches Signieren eines Dokuments,
- Fig. 2: eine schematische Darstellung für mehrere Applikationen, die bei einem Verfahren zum personalisierten elektronischen Signieren eines Dokuments in dem Systems von Datenverarbeitungseinrichtungen zur Ausführung kommt,
- Fig. 3 und 4: eine schematische Darstellung zum Ablauf eines Verfahrens zum personalisierten elektronischen Signieren eines Dokuments nach einem Ausführungsbeispiel,
- Fig. 5 und 6: eine schematische Darstellung zum Ablauf eines Verfahrens zum personalisierten elektronischen Signieren eines Dokuments nach einem weiteren Ausführungsbeispiel und
- Fig. 7 und 8: eine schematische Darstellung zum Ablauf eines Verfahrens zum personalisierten elektronischen Signieren eines Dokuments nach einem anderen Ausführungsbeispiel,

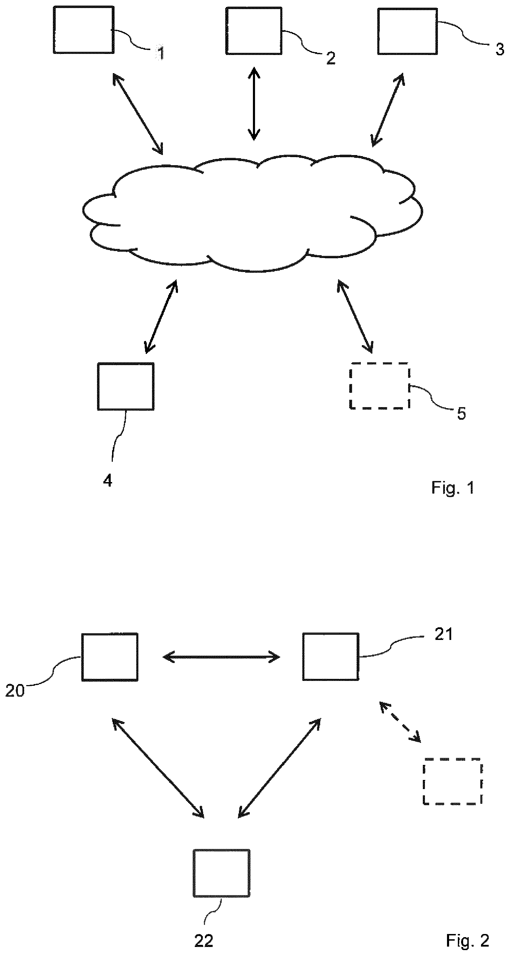

Fig. 1 zeigt schematische Darstellung eines Systems von Datenverarbeitungseinrichtungen, welches eine Datenverarbeitungseinrichtung 1 eines Dienstleisters, eine Datenverarbeitungseinrichtung 2 eines Nutzers, eine Datenverarbeitungseinrichtung 3 einer Personen-Identifizierungsstelle und eine Datenverarbeitungseinrichtung 4 eines Trustcenters für elektronische Signaturen aufweist. Weitere Datenverarbeitungseinrichtungen können vorgesehen sein, was in Fig. 1 mittels einer weiteren Datenverarbeitungseinrichtung 5 schematisch gezeigt ist. Mittels des Systems von Datenverarbeitungseinrichtungen kann eine Client-Server Architektur implementiert sein. Zum Beispiel kann auf der Datenverarbeitungseinrichtung 2 des Nutzers ein Browserclient implementiert sein, welcher im Rahmen des Ausführens von Applikationen eingebunden wird, zum Beispiel um mit einem Server in der Datenverarbeitungseinrichtung 1 des Dienstleisters Daten auszutauschen.

Zum Austauschen von Daten sind die Datenverarbeitungseinrichtungen des Systems über eine Netzwerkstruktur zumindest zeitweise verbunden. Die Netzwerkstruktur kann wenigstens zum Teil eine Datenübertragung über das Internet einbeziehen. Hierbei ist zwischen der Datenverarbeitungseinrichtung 3 der Personen-Identifizierungsstelle und der Datenverarbeitungseinrichtung 2 des Nutzers eine Videokonferenz-Verbindung zum Austauschen von Videodaten ausbildbar.

Mit Hilfe von Programmcode, welcher in zumindest einen Teil der Datenverarbeitungseinrichtungen des Systems in Fig. 1 geladen ist, ist das System von Datenverarbeitungseinrichtungen eingerichtet für ein personalisiertes elektronisches Signieren eines Dokuments, was nachfolgend näher erläutert wird. Fig. 2 zeigt eine schematische Darstellung für mehrere Applikationen, die bei einem Verfahren zum personalisierten elektronischen Signieren eines Dokuments in dem System von Datenverarbeitungseinrichtungen zur Ausführung kommen. Gemäß Fig. 2 gehören zu den Applikationen eine Dienstleister-Applikation 20, eine Personenidentifizierungs-Applikation 21 sowie eine Signatur-Applikation 22, für deren Nutzung im Rahmen des personalisierten elektronischen Signierens eines Dokuments nachfolgend verschiedene Ausführungen beschrieben werden. Zwischen den Applikationen werden bei dem Verfahren Daten ausgetauscht, was in Fig. 2 mittels Pfeilen schematisch gezeigt ist.

In einem Ausführungsbeispiel entscheidet sich ein Nutzer oder Kunde auf der Webseite einer Bank für ein Girokonto und füllt in diesem Zusammenhang die entsprechende Antragstrecke aus. Hierbei gibt der Nutzer persönliche Daten ein wie Name, Geburtsdatum, Anschrift, etc. Der Nutzer erhält die Möglichkeit, im Rahmen des Prozesses bei der Bank ein für den Mitarbeiter nicht sichtbares Passwort / eine PIN für das spätere elektronische Signieren festzulegen. Alternativ kann die Festsetzung des für den Mitarbeiter der Bank nicht sichtbaren Passwortes / PIN über im Rahmen einer Video-Identifizierungssitzung erfolgen. Der Kunde hat in der Regel bei der Bank die Möglichkeit, den Vertrag, also das im Folgenden elektronisch zu signierende Dokument, vorab zu lesen, zu drucken und / oder zu speichern. Der Kunde kann sich sodann entscheiden, durch Klick auf einen entsprechenden "Button" den zum Girokonto gehörenden Vertrag online (qualifiziert elektronisch) zu signieren und sich hierbei gesetzlichen Anforderungen entsprechend zu identifizieren. Die vorgenannten Schritte laufen im Rahmen der Dienstleister-Applikation 20 ab, welche auf der Datenverarbeitungseinrichtung 1 des Dienstleister implementiert ist.

Auf die Nutzeranforderung für das elektronische Signieren und die hierbei gewünschte Personenidentifizierung wird die Personenidentifizierungs-Applikation 21 auf der Datenverarbeitungseinrichtung 3 der Personen-Identifizierungsstelle aufgerufen. Diese erhält die für eine Video-Legitimation notwendigen Datenpunkte durch die Bank (Dienstleister) über eine sichere Schnittstelle übermittelt. Die Personenidentifizierungs-Applikation erhält das von der Bank generierte und für das Trustcenter verschlüsselte Vertragsdokument mit entsprechendem Hash-Wert zur Einbindung in eine Dokumenten-Applikation, welche zum Beispiel entweder eine Online-Applikation oder eine mobile Applikation für Smartphones ist, sowie die E-Mail Adresse des Nutzers über eine sichere Schnittstelle.

Die Personenidentifizierungs-Applikation 21 übermittelt das verschlüsselte Dokument der Bank an die Datenverarbeitungseinrichtung 5 des Trustcenters für elektronische Signaturen und reserviert für dieses Dokument und diese Session ein Zertifikats- und Signaturprodukt, wodurch spätestens zu diesem Zeitpunkt die Signatur-Applikation 22 gestartet wird.

Nach Klick auf den "Button" tritt der Nutzer im Rahmen der Personenidentifizierungs-Applikation 21 in eine Videokonferenz mit einem Mitarbeiter der Personen-Identifizierungsstelle. Dieser führt mit dem Nutzer eine Identifizierung anhand eines international gültigen Ausweisdokuments wie zum Beispiel ID-Karte, Reisepass und / oder Führerschein durch. Hierzu werden Nutzerdaten erfasst und dem Mitarbeiter übermittelt und angezeigt, die dieser im Rahmen der Antragsstrecke angegeben hat. Ist die Identifizierung erfolgreich, wird dem Nutzer entweder eine TAN (Transaktionsnummer) übermittelt, sei es per eMail oder SMS, oder der Nutzer nutzt das im Rahmen der Dienstleister-Applikation 20 bei der Bank festgelegte Passwort / festgelegte PIN, welche(s) er später für die Auslösung der elektronischen Signatur verwenden kann. Weitere Verfahrensschritte können vorgesehen sein, beispielweise eine mündliche Bestätigung der Signatur-Auslösung oder das Erfassen biometrischer Daten wie Fingerabdruck.

Nach erfolgreicher Identifizierung wird die Erstellung eines elektronischen Zertifikats auf den Namen des Nutzers in Echtzeit angestoßen, indem zum Beispiel eine entsprechende Anforderung von der Personenidentifizierungs-Applikation 21 an die Signatur-Applikation 22 übermittelt wird. Das Zertifikat ist eindeutig einer Session zugeordnet und damit nur zur einmaligen Verwendung bestimmt. Die Realisierung kann mittels ein-eindeutiger Kodierung von Session-Merkmalen in Attribute des Zertifikats erfolgen, zum Beispiel bei Verwendung von X.509-Zertifikaten mittels Einbringen der Session-ID sowie des Identifikationszeitpunkt in das X.509-Attribut "extension.restriction" oder in das X.509-Attribut "extension.additionalInformation". X.509 ist ein ITU-T-Standard (Internationale Fernmeldeunion, Standardisierung Sektor Telekommunikation) für eine Public-Key-Infrastruktur zum Erstellen digitaler Zertifikate, insbesondere nach der aktuellen Version 3 (X.509v3).

Die Identifizierung im Rahmen der Videokonferenz kann als funktional dem Einstecken einer Signaturkarte in ein entsprechendes Lesegerät angesehen werden. Es wird hierbei sichergestellt, dass der gesamte Identifikations- und Signaturprozess in einer Session durch den Endkunden abgewickelt wird.

Nach erfolgreicher Eingabe schließt sich die Videokonferenz und für den Nutzer öffnet sich im Browser / im Mobilgerät (Datenverarbeitungseinrichtung 2) die Signatur-Applikation 22. Hier wird der Nutzer zunächst über den Ablauf des Signatur-Prozesses aufgeklärt. Stimmt der Nutzer Nutzungsbestimmungen und Datenschutzbestimmungen zu, wird ihm als nächstes im Rahmen der Signatur-Applikation 22 der zu signierende Vertrag auf einem Display der Datenverarbeitungseinrichtung 2 des Nutzers angezeigt. Der Nutzer hat die Möglichkeit, den Vertrag auszudrucken oder am Bildschirm durchzulesen. Nachdem der Kunde das Dokument gelesen hat, kann er mittels Eingabe (Klick auf einen entsprechenden "Button") den eigentlichen Signaturprozess beginnen.

Nachdem die Identifizierung erfolgreich abgeschlossen wurde und dem Kunden ein Passwort / eine PIN übermittelt wurde, hat der Kunde die Möglichkeit, mittels Eingabe des Passwortes / der PIN die Signatur auszulösen. Alternativ kann die PIN verwendet werden, die der Kunde vorher selbst festgelegt hat.

Nach Ausstellung des Zertifikats durch das Trustcenter und dessen Bereitstellung in der Datenverarbeitungseinrichtung 4 des Trustcenters erfolgt die eigentliche elektronische Signatur des Dokuments mit Hilfe eines Signaturschlüssels, welches im Trustcenter in einer sicheren Signaturerstellungseinheit (SSEE) hinterlegt ist, zum Beispiel einem Hardware Security Modul (HSM). Im Anschluss an den Signaturvorgang wird das signierte Dokument in der Datenverarbeitungseinrichtung 4 des Trustcenters einer Signaturverifikation unterzogen. Anschließend wird das zum digitalen Signieren verwendete Signaturschlüsselpaar gelöscht, und das Signaturzertifikat wird widerrufen.

Alternativ sind auch Verfahren möglich, bei denen das Schlüsselmaterial und das Signaturzertifikat für eine spätere Verwendung für den Nutzer aufbewahrt werden. Dies kann zum Beispiel dadurch geschehen, dass der Kunde nach Abschluss der Signatur auf seinen Wunsch zu einer "on-the-fly"-Registrierung übergeleitet wird, in dessen Rahmen er eine User-ID und ein Passwort sowie einen Auslösemechanismus für zukünftige Signaturen mit dem definierten Schlüsselmaterial festlegen kann.

Das digital signierte Dokument mitsamt Verifikationsreport/ -bericht wird anschließend von der Datenverarbeitungseinrichtung 4 des Trustcenters an die Datenverarbeitungseinrichtung 1 des Dienstleisters (Bank) übermittelt. Optional können die Dokumente für die Bank mittels der Signatur-Applikation 22 verschlüsselt übertragen werden. Die ursprünglichen Dokumente (unsigniertes und signiertes Dokument sowie Verifikationsreport) werden in der Datenverarbeitungseinrichtung 4 des Trustcenters gelöscht.

Für das Beispiel einer Online-Kontoeröffnung mit elektronischer Signatur eines Vertrags werden nachfolgend weitere Ausgestaltungen beschrieben. Hierbei interagiert der Nutzer (Kunde) mit seiner Bank und entscheidet sich, dort ein Konto zu eröffnen. In der gleichen Online-Sitzung (Session) wird der Nutzer mit Hilfe der Videoidentifizierung eindeutig identifiziert. Für den Kunden wird anschließend basierend auf den im Rahmen der Videoidentifizierung erhobenen Daten ein Signaturzertifikat generiert, mit dem ebenfalls in der gleichen Sitzung der zu unterzeichnende Vertrag medienbruchfrei online unterschrieben werden kann, wodurch der Prozess in dem System von Datenverarbeitungseinrichtungen dem geforderten Sicherheitsstandard entsprechend ausführbar ist.

Diese medienbruchfreie, transaktionsbasierte Online-Identifikation mit Online-Signatur kann mittels unterschiedlicher Kombinationen der Technologien erreicht werden. Im Folgenden werden verschiedene Ausführungsbeispiele erläutert.

### Beispiel 1

Hierbei wird Folgendes angenommen: Bank ist Kunde bei der Personen-Identifizierungsstelle; und die Signatur-Applikation 22 wird als Online-Signaturplattform verwendet. Das Verfahren weist die folgenden Schritte auf:
a. Der Kunde interagiert im Rahmen der Dienstleister-Applikation 20 mit der Bank-Webseite und eröffnet ein Konto.
b. Dem Vorgang wird eine eindeutige Session-ID zugeordnet und ein Zertifikats- und Signaturprodukt reserviert.
c. Der Kunde wird zur Personenidentifizierungs-Applikation umgeleitet und dort identifiziert.
d. Nach erfolgreicher Identifikation leitet die Personenidentifizierungs-Applikation 21 die Benutzerdaten an Signatur-Applikation 22 weiter, um dort im Trustcenter ein Zertifikat für den Kunden zu generieren.
e. Der Kunde wird auf Signatur-Applikation 22 umgeleitet, wo er das zu signierende Dokument überprüfen und dann eine Trustcenter-Signatur auslösen kann.
f. Anschließend gelangt der Kunde zurück zur Bank und ist sowohl identifiziert als auch im Besitz eines gültig qualifiziert elektronisch signierten Vertrages.

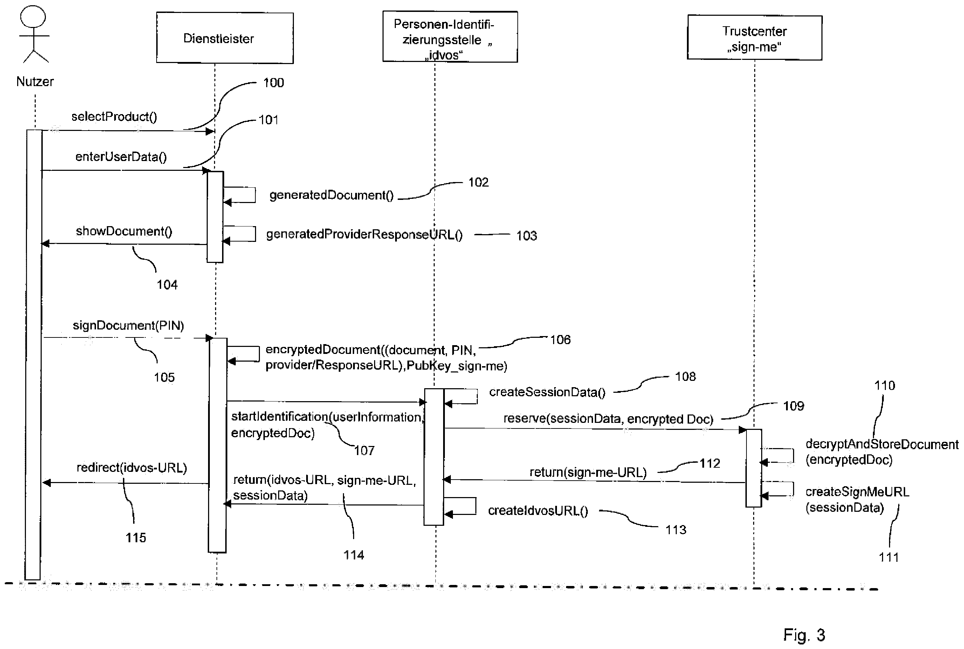

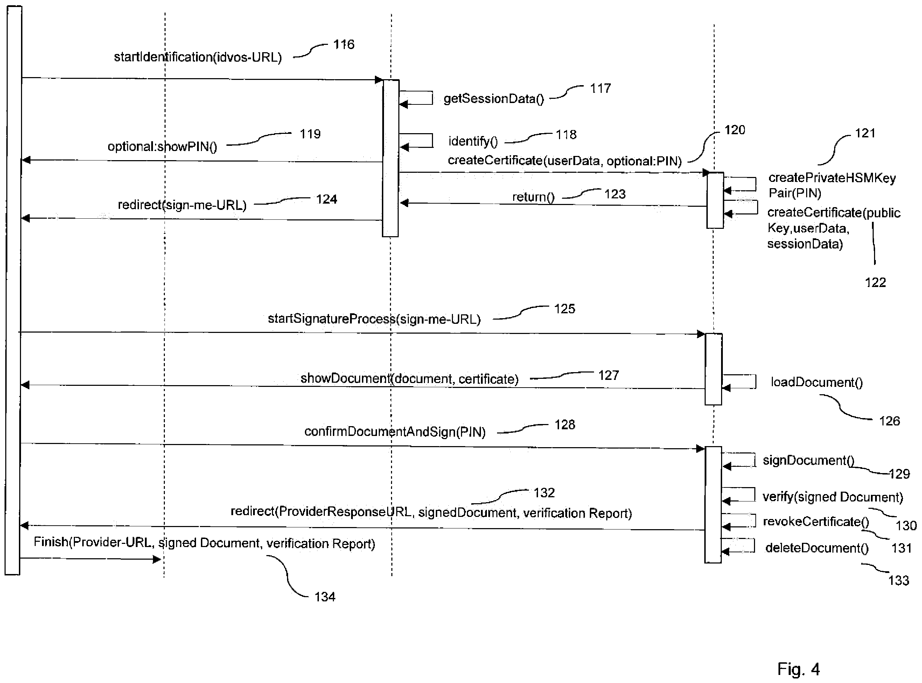

Fig. 3 und 4 zeigt eine schematisch Darstellung zu einem Ablauf eines Verfahrens von zum personalisierten elektronischen Signieren eines Dokuments nach dem Beispiel 1 weiter im Detail. Hierbei wählt im Schritt 100 ein Nutzer oder Kunde des Nutzers bei einem Dienstleister ein Produkt aus, wozu an der Datenverarbeitungseinrichtung 2 des Nutzers eine Nutzereingabe erfasst wird. Hierauf werden im Rahmen der Dienstleister-Applikation 20 im Schritt 101 persönlichen Daten des Nutzers erfasst. Bei dem Produkt handelt es sich zum Beispiel um eine Kontoeröffnung beim Dienstleister, beispielsweise eine Bank.

Im Schritt 102 wird aus den erfassten persönlichen Daten des Nutzers beim Dienstleister 11 für das ausgewählte Produkt das zu unterzeichnende elektronische Dokument erzeugt, beispielsweise ein Vertrag zur Kontoeröffnung. Im Rahmen der Dienstleisterapplikation 20 wird beim Dienstleister in Schritt 103 für das elektronisch zu signierende Dokument eine zugeordnete Rücksprungadresse reserviert, über welche mittels der Dienstleisterapplikation 20 das elektronisch zu signierende Dokument zurückgehalten wird. Dem Nutzer wird im Schritt 104 das elektronisch zu signierende Dokument an seiner Datenverarbeitungseinrichtung 2 angezeigt. Im Schritt 105 wird eine Eingabe des Nutzers betreffend "Dokument signieren" erfasst. Hierbei kann wahlweise eine Nutzereingabe erfasst werden, mit der der Nutzer eine Personenidentifizierungsnummer (PIN) auswählt, die für einen späteren Signaturauslöseprozess verwendet werden soll. Im Rahmen der Dienstleister-Applikation 20 wird das elektronisch zu signierende Dokument verschlüsselt (Schritt 106). Hierbei werden die Rücksprungadresse sowie die optional erfasste PIN des Nutzers einbezogen. Die Verschlüsselung erfolgt mit einem öffentlichen Schlüssel des Trustcenters.

Die Dienstleister-Applikation 20 startet im Schritt 107 einen Verbindungsaufbau zur Datenverarbeitungseinrichtung 3 der Personen-Identifizierungsstelle. Es werden das verschlüsselte Dokument sowie die für den Nutzer erfassten persönlichen Daten übergeben. Die Datenverarbeitungseinrichtung 3 der Personen-Identifizierungsstelle erstellt oder startet im Schritt 108 eine neue Sitzung (Session) und hält in dieser die erfassten persönlichen Daten des Nutzers sowie das verschlüsselte Dokument vor.

Im Rahmen der Personenidentifizierungs-Applikation 21 nimmt die Datenverarbeitungseinrichtung 3 der Personen-Identifizierungsstelle im Schritt 109 Kontakt zur Datenverarbeitungseinrichtung 4 des Trustcenters auf und reserviert dort für die Sitzung ein elektronisches Zertifikat, welches der Sitzung individuell zugeordnet ist. Hierbei werden an die Datenverarbeitungseinrichtung 4 des Trustcenters elektronische Sitzungsinformationen sowie das verschlüsselte elektronische Dokument übergeben. Dieses wird gemäß Schritt 110 in der Datenverarbeitungseinrichtung 4 des Trustcenters entschlüsselt, um es für die laufende Sitzung (Session) vorzuhalten. Im Schritt 111 wird in der Datenverarbeitungseinrichtung 4 des Trustcenters eine elektronische Signatur-Adresse erzeugt, über welche der Nutzer schließlich das elektronisch zu signierende Dokument signieren kann. Die Personenidentifizierungs-Applikation 21 gibt im Schritt 112 die Signatur-Adresse an die Datenverarbeitungseinrichtung 3 der Personen-Identifizierungsstelle, welche hierauf im Schritt 113 für die laufende Sitzung eine Identifikations-Adresse erzeugt. Die Identifikations-Adresse wird zusammen mit der elektronischen Signatur-Adresse und Sitzungsdaten an die Datenverarbeitungseinrichtung 1 des Dienstleisters übermittelt (Schritt 114).

Die Datenverarbeitungseinrichtung 1 des Dienstleisters leitet im Schritt 115 die Datenkommunikation mit der Datenverarbeitungseinrichtung 2 des Nutzers auf die Netzwerkadresse der Datenverarbeitungseinrichtung 3 der Personen-Identifizierungsstelle um. Es wird im Rahmen der Identifizierungs-Applikation 21 eine Videokonferenz-Verbindung von der Datenverarbeitungseinrichtung 3 der Personen-Identifizierungsstelle zu der Datenverarbeitungseinrichtung 2 des Nutzers aufgebaut, um den Personen-Identifizierungsprozess per Video zu starten (Schritt 116). Die Datenverarbeitungseinrichtung 3 der Personen-Identifizierungsstelle lädt im Schritt 117 die mit der Identifikations-Adresse gespeicherte Information zur laufenden Sitzung (Session) und beginnt im Schritt 118 die Personenidentifizierung. Hat der Nutzer keine PIN gewählt, erzeugt die Datenverarbeitungseinrichtung 3 der Personen-Identifizierungsstelle eine PIN für den Nutzer (Schritte 117 und 118). Im Schritt 119 kann die erzeugte PIN wahlweise dem Nutzer auf der Datenverarbeitungseinrichtung 2 des Nutzers angezeigt werden.

Im Anschluss an die erfolgreiche Personenidentifizierung wird im Schritt 120 eine Datenkommunikation zwischen der Datenverarbeitungseinrichtung 3 der Personen-Identifizierungsstelle und der Datenverarbeitungseinrichtung 4 des Trustcenters hergestellt, um im Rahmen der Personenidentifizierung erzeugte identifizierende Personendaten zu übertragen. Hierauf erstellt die Datenverarbeitungseinrichtung 4 des Trustcenters für den Kunden ein neues Paar von elektronischen Signaturschlüsseln sowie ein elektronisches Signaturzertifikat, welches neben den identifizierenden Personendaten auch die Informationen zu der laufenden Sitzung enthält (Schritte 121 und 122). Im Schritt 123 sind das Erzeugen des elektronischen Zertifikats sowie die Personenidentifizierung abgeschlossen, und der Nutzer wird im Schritt 124 über die elektronische Signatur-Adresse zur Datenverarbeitungseinrichtung 4 des Trustcenters weitergeleitet. Hierfür wird eine Datenverbindung zwischen der Datenverarbeitungseinrichtung 2 des Nutzers und der Datenverarbeitungseinrichtung 4 des Trustcenters hergestellt.

Im Schritt 125 wird der eigentliche Signatur-Prozess gestartet. Die Datenverarbeitungseinrichtung 4 des Trustcenters lädt im Schritt 126 aus den mit der Signatur-Adresse und der laufenden Sitzung vorgehaltenen elektronischen Daten das elektronisch zu signierende Dokument sowie das für den Nutzer erstellte elektronische Zertifikat. Das elektronisch zu signierende Dokument sowie das elektronische Zertifikat werden dem Nutzer vor dem elektronischen Signieren im Schritt 127 noch einmal mittels der Datenverarbeitungseinrichtung 2 des Nutzers zur Kenntnis gebracht. Ist der Nutzer mit dem elektronisch zu signierenden Dokument und dem hierfür erstellten elektronischen Zertifikat einverstanden, bestätigt er dies mittels einer entsprechenden Eingabe an der Datenverarbeitungseinrichtung 2 des Nutzers. Hierbei wird die vom Nutzer zu diesem Zeitpunkt an der Datenverarbeitungseinrichtung 2 des Nutzers angegebene PIN bereitgestellt (vgl. Schritt 106 oder 118 oben), was im Schritt 128 erfolgt. Als Reaktion wird im Schritt 129 in der Datenverarbeitungseinrichtung 4 des Trustcenters mittels HSM und dem der laufenden Sitzung zugeordneten Signaturschlüssel die elektronische Signatur für das elektronisch zu signierende Dokument erzeugt. Im Schritt 130 wird anschließend das elektronisch oder digital signierte Dokument verifiziert, und ein Verifikationsbericht oder Verifikationsreport wird in der Datenverarbeitungseinrichtung 4 des Trustcenters erzeugt.

Der Signaturschlüssel wurde sitzungsabhängig bereitgestellt. Im Schritt 131 wird das zugehörige elektronische Signaturzertifikat widerrufen, da es wegen der sitzungsabhängigen Bereitstellung nicht mehr weiter verwendbar ist.

Der Nutzer wird zusammen mit dem elektronisch digital signierten Dokument und dem Verifikationsbericht zurück an die Datenverarbeitungseinrichtung 1 des Dienstleisters geleitet (Schritt 132). In der Datenverarbeitungseinrichtung 4 des Trustcenters werden im Schritt 133 die zur abgelaufenen Sitzung gehörenden elektronischen Dokumente, insbesondere das nicht signierte sowie das dann elektronisch signierte Dokument sowie der Verifikationsbericht, gelöscht.

Das Verfahren ist im Schritt 134 beendet, sobald der Nutzer über seine Datenverarbeitungseinrichtung 2 an der Datenverarbeitungseinrichtung 1 des Dienstleisters die Rücksprungadresse erreicht und das elektronisch signierte Dokument zusammen mit dem Verifikationsbericht abliefert.

### Beispiel 2

Hierbei wird Folgendes angenommen: Bank ist Kunde bei dem Trustcenter für elektronische Signaturen; Personenidentifizierungs-Applikation 21 wird als Identifikations-Plattform verwendet. Das Verfahren weist die folgenden Schritte auf:
a. Der Kunde interagiert im Rahmen der Dienstleister-Applikation 20 mit der Bank-Webseite und eröffnet ein Konto.
b. Dem Vorgang wird eine eindeutige Session-ID zugeordnet und ein Zertifikats- und Signaturprodukt reserviert.
c. Der Kunde wird zur Signatur-Applikation 22 umgeleitet und dort im Rahmen Video-Sitzung mit Personenidentifizierungs-Applikation 21 identifiziert.
d. Nach erfolgreicher Identifikation leitet Personenidentifizierungs-Applikation 21 die Benutzerdaten an Signatur-Applikation 22 weiter, um dort im Trustcenter der D-TRUST ein Zertifikat für den Kunden zu generieren.
e. Der Kunde überprüft das zu signierende Dokument und kann dann eine Trustcenter-Signatur auslösen.
f. Anschließend gelangt der Kunde zurück zur Bank und ist sowohl identifiziert als auch im Besitz eines gültig qualifiziert elektronisch signierten Vertrages.

Bei den Beispielen 1 und 2 finden die Schritte zum Personen-Identifizieren und zum elektronischen Signieren getrennt statt, also nacheinander. Im folgenden Beispiel 3 findet die Signaturerzeugung während einer Video-Sitzung der Personen-Identifizierung statt.

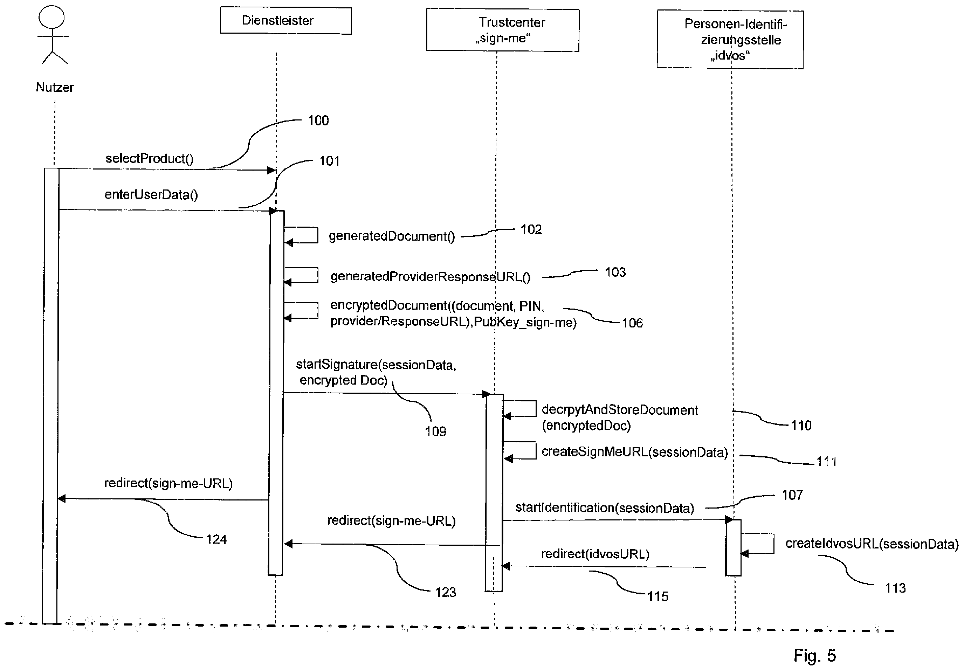

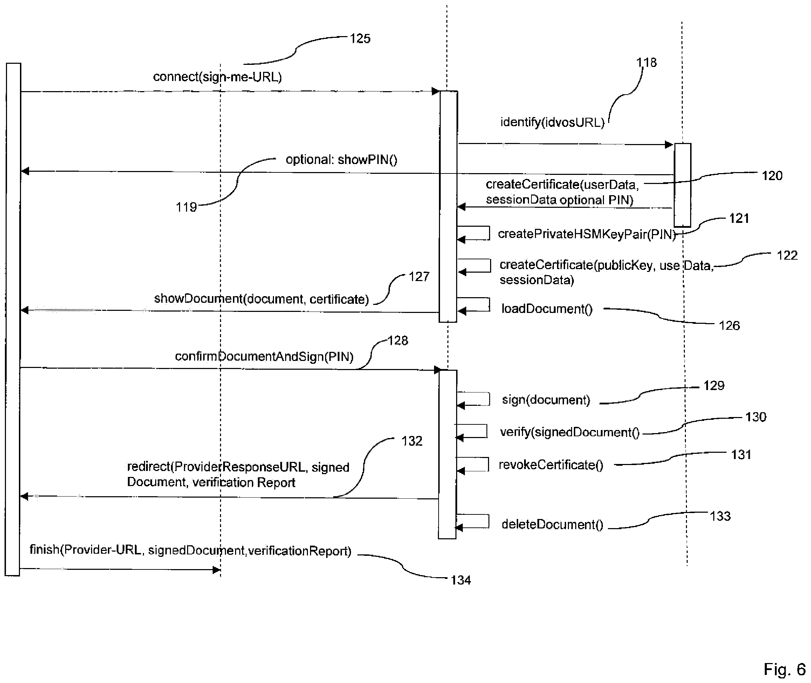

Fig. 5 und 6 zeigt eine schematisch Darstellung zu einem Ablauf eines Verfahrens von zum personalisierten elektronischen Signieren eines Dokuments nach dem Beispiel 2 weiter im Detail. Im Vergleich zu dem oben unter Bezugnahme auf die Fig. 3 und 4 erläuterten Verfahren entfallen aufgrund geänderter Reihenfolge von Teilprozessen, also insbesondere ein direktes Aufrufen der Signatur-Applikation 22 und das Anstoßen der Personenidentifizierung im Rahmen der Signatur-Applikation 22, die Schritte 104, 105, 108, 112, 114, 116 und 117.

### Beispiel 3

Hierbei wird Folgendes angenommen: Bank ist Kunde bei der Personen-Identifizierungsstelle und dem Trustcenter, und der Nutzer unterschreibt im Rahmen der Video-Konferenz im Beisein des Mitarbeiters der Personen-Identifizierungsstelle. Das Verfahren weist die folgenden Schritte auf:
a. Der Kunde oder Nutzer interagiert im Rahmen der Dienstleister-Applikation 20 mit der Bank-Webseite und eröffnet ein Konto.
b. Dem Vorgang wird eine eindeutige Session-ID zugeordnet und ein Zertifikats- und Signaturprodukt reserviert.
c. Der Kunde wird zu Signatur-Applikation 22 umgeleitet; es wird unmittelbar eine Video-Sitzung für die Personenidentifizierungs-Applikation 21 gestartet.
d. Nach erfolgreicher Identifikation leitet die Personenidentifizierungs-Applikation 21 die Benutzerdaten an die Signatur-Applikation 22 weiter, um dort im Trustcenter ein Zertifikat für den Kunden zu generieren.
e. Der Kunde überprüft das zu signierende Dokument und kann dann eine Trustcenter-Signatur auslösen.
f. Nach Erzeugung der Signatur wird die Video-Sitzung beendet.
g. Anschließend gelangt der Kunde zurück zur Bank und ist sowohl identifiziert als auch im Besitz eines gültig qualifiziert elektronisch signierten Vertrages.

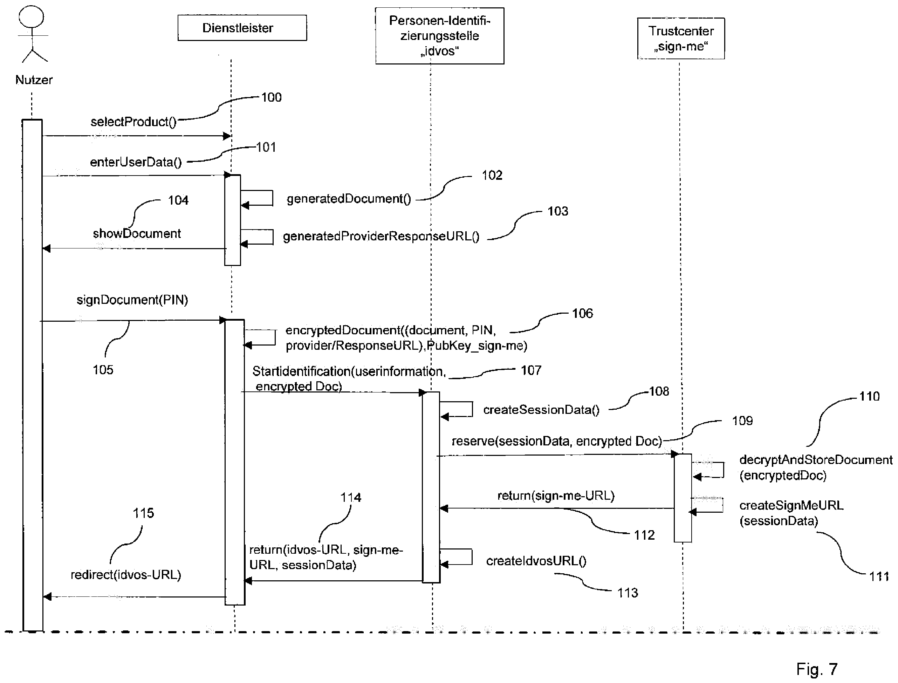

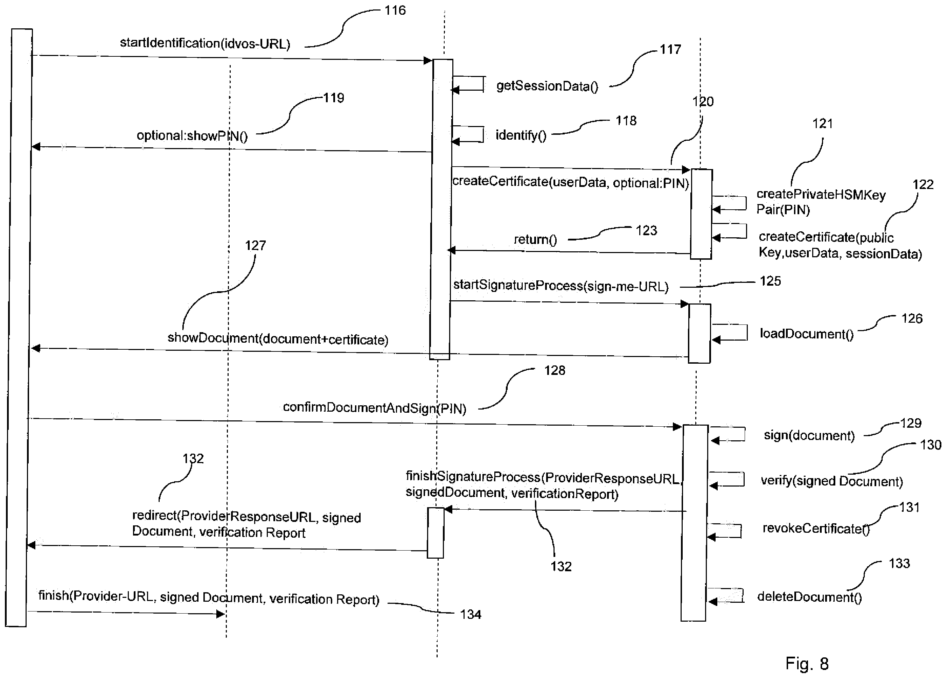

Fig. 7 und 8 zeigt eine schematisch Darstellung zu einem Ablauf eines Verfahrens von zum personalisierten elektronischen Signieren eines Dokuments nach dem Beispiel 3 weiter im Detail. Aufgrund des Ausführens der Signatur-Applikation 22 im Rahmen der Video-Identifizierung entfällt Schritt 124.

Im folgenden Beispiel 4 startet der Nutzer aus der Signatur-Applikation 22 und hat die Möglichkeit, das Dokument in der Signatur-Applikation 22 zu sichten und zu prüfen. Der Kunde indiziert bereits in der Signatur-Applikation 22 mittels einer entsprechenden Nutzereingabe seinen Willen, sich zu identifizieren und das Vertragsdokument qualifiziert zu signieren. Danach startet der Kunde in die Video-Identifizierung im Rahmen der Personenidentifizierungs-Applikation 21 und bestätigt im Anschluss die qualifizierte Signatur des Dokuments.

### Beispiel 4

Hierbei wird Folgendes angenommen: Bank ist Kunde bei der Personen-Identifizierungsstelle und dem Trustcenter, und der Nutzer prüft Dokument vor Identifizierung und Signatur im Rahmen der Signatur-Applikation 22. Das Verfahren weist die folgenden Schritte auf:
a. Der Kunde interagiert im Rahmen der Dienstleister-Applikation 20 mit der Bank-Webseite und eröffnet ein Konto.
b. Dem Vorgang wird eine eindeutige Session-ID zugeordnet und ein Zertifikats- und Signaturprodukt reserviert.
c. Der Kunde wird zu der Signatur-Applikation 22 umgeleitet und überprüft das zu signierende Dokument in der Signatur-Applikation 22 und indiziert seinen Willen, sich zu identifizieren und das entsprechende Dokument zu signieren.
d. Der Kunde wird zur Personenidentiflzierungs-Applikation 21 umgeleitet; es wird unmittelbar eine Video-Sitzung für die Personenidentifizierungs-Applikation 21 gestartet.
e. Nach erfolgreicher Identifikation leitet die Personenidentifizierungs-Applikation 21 die Benutzerdaten an Signatur-Applikation weiter, um dort im Trustcenter der D-TRUST ein Zertifikat für den Kunden zu generieren.
f. Der Kunde kann dann eine Trustcenter-Signatur auslösen.
g. Nach Erzeugung der Signatur wird die Video-Sitzung beendet.

Anschließend gelangt der Kunde zurück zur Dienstleister-Applikation 20 der Bank und ist sowohl identifiziert als auch im Besitz eines gültig qualifiziert signierten Vertrages.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Datenverarbeitungseinrichtung eines Dienstleisters
- 2: Datenverarbeitungseinrichtung eines Nutzers
- 3: Datenverarbeitungseinrichtung einer Personen-Identifizierungsstelle
- 4: Datenverarbeitungseinrichtung eines Trustcenters
- 5: weitere Datenverarbeitungseinrichtung

- 20: Dienstleister-Applikation
- 21: Personenidentiflzierungs-Applikation
- 22: Signatur-Applikation

## Patentansprüche

1. Verfahren zum personalisierten elektronischen Signieren eines Dokuments, wobei das Verfahren im Rahmen von in einem System von Datenverarbeitungseinrichtungen ausgeführten Applikationen die folgenden
Schritte aufweist:
- im Rahmen einer Dienstleister-Applikation (20),
- Bereitstellen eines Dokuments, welches elektronisch zu signieren ist, und Verschlüsseln des Dokuments in einer Datenverarbeitungseinrichtung (1) eines Dienstleisters;
- Übertragen des verschlüsselten Dokuments an eine Datenverarbeitungseinrichtung (4) eines Trustcenters für elektronische Signaturen, wobei hierbei das verschlüsselten Dokument von der Datenverarbeitungseinrichtung (1) des Dienstleisters über eine Datenverarbeitungseinrichtung (3) einer Personen-Identifizierungsstelle an die Datenverarbeitungseinrichtung (4) des Trustcenters übertragen wird;
- Bereitstellen von Nutzerdaten in der Datenverarbeitungseinrichtung (1) des Dienstleisters, wobei hierbei die Nutzerdaten über eine Datenverarbeitungseinrichtung (2) eines Nutzers erfasst werden;
- Übertragen der erfassten Nutzerdaten an die Datenverarbeitungseinrichtung (3) der Personen-Identifizierungsstelle; und
- Starten einer Sitzung durch die Datenverarbeitungseinrichtung (3) der Personen-Identifizierungsstelle auf das Starten eines Verbindungsaufbaus zur Datenverarbeitungseinrichtung (3) der Personen-Identifizierungsstelle;
- im Rahmen einer Personenidentifizierungs-Applikation (21),
- Aufbauen eines Kontakts zwischen der Datenverarbeitungseinrichtung (3) der Personen-Identifizierungsstelle und der Datenverarbeitungseinrichtung (4) des Trustcenters;
- Reservieren eines elektronischen Zertifikats für die Sitzung in der Datenverarbeitungseinrichtung (4) des Trustcenters, wobei hierbei an die Datenverarbeitungseinrichtung (4) des Trustcenters elektronische Sitzungsinformationen übergeben werden und wobei das elektronische Zertifikat der Sitzung individuell zugeordnet wird;
- Aufbauen einer Videokonferenz-Verbindung von der Datenverarbeitungseinrichtung (3) der Personen-Identifizierungsstelle zu der Datenverarbeitungseinrichtung (2) des Nutzers und Ausführen einer Personenidentifizierung des Nutzers in der Datenverarbeitungseinrichtung (3) der Personen-Identifizierungsstelle im Rahmen einer Videokonferenz sowie Schließen der Videokonferenz-Verbindung;
- Herstellen einer Datenkommunikationsverbindung zwischen der Datenverarbeitungseinrichtung (3) der Personen-Identifizierungsstelle und der Datenverarbeitungseinrichtung (4) des Trustcenters im Anschluss an die Personenidentifizierung; und
- Übertragen von im Rahmen der Personenidentifizierung erzeugten, den Nutzer identifizierenden Personendaten über die Datenkommunikationsverbindung an die Datenverarbeitungseinrichtung (4) des Trustcenters; und
- im Rahmen einer Signatur-Applikation (22),
- Ausführen eines elektronischen Signaturprozesses, bei dem in der Datenverarbeitungseinrichtung (4) des Trustcenters
- das elektronisches Zertifikat bereitgestellt, wobei hierbei die Datenverarbeitungseinrichtung (4) des Trustcenters ein Paar elektronische Signaturschlüssel sowie ein elektronisches Signaturzertifikat erzeugt werden, welches neben den identifizierenden Personendaten die Sitzungsinformation zur laufenden Sitzung umfasst;
- das Dokument elektronisch mittels des elektronisches Zertifikats signiert und
- für das elektronisch signierte Dokument eine Verifikation ausgeführt werden; und
- Übertragen des elektronisch signierten Dokuments und eines Reports über die Verifikation an die Datenverarbeitungseinrichtung (1) des Dienstleisters.

2. Verfahren nach Anspruch 1, **dadurch gekennzeichnet, dass** Ausführen des elektronischen Signaturprozesses in der Datenverarbeitungseinrichtung (4) des Trustcenters die folgenden Schritte aufweist:
- Bereitstellen des elektronischen Zertifikats als ein digitales Zertifikat für ein digitales Signieren und
- digitales Signieren des Dokuments mit dem digitalen Zertifikat.

3. Verfahren nach Anspruch 1 oder 2, **dadurch gekennzeichnet, dass** die Nutzerdaten von der Datenverarbeitungseinrichtung (1) des Dienstleisters an die Datenverarbeitungseinrichtung (4) des Trustcenters übertragen werden.

4. Verfahren nach mindestens einem der vorangehenden Ansprüche, **dadurch gekennzeichnet, dass** als Reaktion auf einen Applikationsaufruf die Personenidentifizierungs-Applikation (21) aus der Dienstleister-Applikation (20) heraus aufgerufen wird.

5. Verfahren nach mindestens einem der vorangehenden Ansprüche, **dadurch gekennzeichnet, dass** als Reaktion auf einen Applikationsaufruf die Signatur-Applikation (22) aus der Dienstleister-Applikation (20) heraus aufgerufen wird.

6. Verfahren nach mindestens einem der vorangehenden Ansprüche, **dadurch gekennzeichnet, dass** als Reaktion auf einen Applikationsaufruf die Personenidentifizierungs-Applikation (21) aus der Signatur-Applikation (22) heraus aufgerufen wird.

7. Verfahren nach mindestens einem der vorangehenden Ansprüche, **dadurch gekennzeichnet, dass** als Reaktion auf einen Applikationsaufruf die Signatur-Applikation (22) aus der Personenidentifizierungs-Applikation (21) heraus aufgerufen wird.

8. Verfahren nach mindestens einem der vorangehenden Ansprüche, **dadurch gekennzeichnet, dass** das elektronisch zu signierende Dokument dem Nutzer über eine Anzeigeeinrichtung der Datenverarbeitungseinrichtung (2) des Nutzers ausgeben wird, wobei das Ausgeben durch die Signatur-Applikation (22) und / oder die Personenidentifizierungs-Applikation (21) veranlasst wird.

9. Verfahren nach mindestens einem der vorangehenden Ansprüche, **dadurch gekennzeichnet, dass** im Rahmen der Personenidentifizierungs-Applikation (21) Identifizierungsdaten bereitgestellt und an die Dienstleister-Applikation (20) übergeben werden.

10. Vorrichtung zum personalisierten elektronischen Signieren eines Dokuments, mit einem System von Datenverarbeitungseinrichtungen, wobei das System eine Datenverarbeitungseinrichtung (1) eines Dienstleisters, eine Datenverarbeitungseinrichtung (2) eines Nutzers, eine Datenverarbeitungseinrichtung (3) einer Personen-Identifizierungsstelle und eine Datenverarbeitungseinrichtung (4) eines Trustcenters für elektronische Signaturen aufweist, wobei auf dem System von Datenverarbeitungseinrichtungen eine Dienstleister-Applikation (20), eine Personenidentifizierungs-Applikation (21) und eine Signatur-Applikation (22) implementiert sind, die eingerichtet sind, ein Verfahren nach einem der Ansprüche 1 bis 9 auszuführen,

11. Computerprogrammprodukt, welches auf einem Speichermedium gespeicherten Programmcode aufweist, der eingerichtet ist, beim Laden des Programmcodes in Datenverarbeitungseinrichtungen (1, ..., 4) ein Verfahren zum personalisierten elektronischen Signieren eines Dokuments nach mindestens einem der Ansprüche 1 bis 9 auszuführen.

## Claims

1. A method for the personalized electronic signing of a document, wherein the method comprises the following steps in the context of applications executed in a system of data-processing devices:
- within the framework of a service-provider application (20),
- provision of a document which is to be signed electronically and encryption of the document in a data-processing device (1) of a service provider;
- transmission of the encrypted document to a data-processing device (4) of a trust centre for electronic signatures, wherein in this case the encrypted document is transmitted from the data-processing device (1) of the service provider via a data-processing device (3) of a personal identification point to the data-processing device (4) of the trust centre;
- provision of user data in the data-processing device (1) of the service provider, wherein in this case the user data are collected via a data-processing device (2) of a user;
- transmission of the collected user data to the data-processing device (3) of the personal identification point; and
- initiation of a session by the data-processing device (3) of the personal identification point on the initiation of a connection set-up to the data-processing device (3) of the personal identification point;
- within the framework of a personal identification application (21),
- establishing of a contact between the data-processing device (3) of the personal identification point and the data-processing device (4) of the trust centre;
- reservation of an electronic certificate for the session in the data-processing device (4) of the trust centre, wherein in this case electronic session information is delivered to the data-processing device (4) of the trust centre and wherein the electronic certificate is individually assigned to the session;
- establishing a video conference connection from the data-processing device (3) of the personal identification point to the data-processing device (2) of the user and execution of personal identification of the user in the data-processing device (3) of the personal identification point within the framework of a video conference and also closing of the video conference connection;
- establishing a data communications connection between the data-processing device (3) of the personal identification point and the data-processing device (4) of the trust centre following the personal identification; and
- transmission of personal data identifying the user generated within the framework of the personal identification via the data communications connection to the data-processing device (4) of the trust centre; and
- within the framework of a signature application (22)
- execution of an electronic signing process during which in the data-processing device (4) of the trust centre
- the electronic certificate is provided, wherein in this case the data-processing device (4) of the trust centre, a pair of electronic signature codes and an electronic signature certificate are generated, which electronic signature certificate comprises the session information for the current session in addition to the identifying personal data;
- the document is signed electronically by means of the electronic certificate and
- a verification is carried out for the electronically signed document; and
- transmission of the electronically signed document and a report regarding the verification to the data-processing device (1) of the service provider.

2. The method according to claim 1, **characterized in that** the execution of the electronic signature process in the data-processing device (4) of the trust centre comprises the following steps:
- provision of the electronic certificate as a digital certificate for digital signing and
- digital signing of the document with the digital certificate.

3. The method according to claim 1 or 2, **characterized in that** the user data are transmitted from the data-processing device (1) of the service provider to the data-processing device (4) of the trust centre.

4. The method according to at least one of the preceding claims, **characterized in that** in response to an application being called, the personal identification application (21) is called from the service provider application (20).

5. The method according to at least one of the preceding claims, **characterized in that** in response to an application being called, the signature application (22) is called from the service provider application (20).

6. The method according to at least one of the preceding claims, **characterized in that** in response to an application being called, the personal identification application (21) is called from the signature application (22).

7. The method according to at least one of the preceding claims, **characterized in that** in response to an application being called, the signature application (22) is called from the personal identification application (21).

8. The method according to at least one of the preceding claims, **characterized in that** the document to be signed electronically is output to the user via a display device of the data-processing device (2) of the user, wherein the outputting is initiated by the signature application (22) and/or the personal identification application (21).

9. The method according to at least one of the preceding claims, **characterized in that** within the framework of the personal identification application (21) identification data are supplied and transmitted to the service-provider application (20).

10. A device for the personalized electronic signing of a document with a system of data-processing devices, wherein the system comprises a data-processing device (1) of a service provider, a data-processing device (2) of a user, a data-processing device (3) of a personal identification point and a data-processing device (4) of a trust centre for electronic signatures, wherein, on the system of data-processing devices, a service-provider application (20), a personal identification application (21) and a signature application (22) are implemented which are configured to implement a method according to one of the claims 1 to 9.

11. A computer program product which comprises a program code stored on a storage medium, the program code configured to implement a method for the personalized electronic signing of a document according to at least one of claims 1 to 9 when the program code is loaded in data-processing devices (1, ...., 4).

## Revendications

1. Procédé de personnalisation des signatures électroniques d'un document, dans lequel le procédé dans le cadre des applications exécutées dans un système par les dispositifs de traitement de données présente les étapes suivantes :
- dans le cadre d'une application de fournisseur de services (20),
- fournir un document, qui doit être signé électroniquement et crypter le document dans un dispositif de traitement de données (1) d'un fournisseur de services,
- transmettre le document crypté à un dispositif de traitement de données (4) d'un centre de confiance pour signatures électroniques, dans lequel de cette manière le document crypté est transmis par le dispositif de traitement de données (1) du fournisseur de services par l'intermédiaire d'un dispositif de traitement de données (3) d'un point d'identification d'une personne au dispositif de traitement de données (4) du centre de confiance ;
- fournir des données d'utilisateur dans le dispositif de traitement de données (1) du fournisseur de services, dans lequel de cette manière les données d'utilisateur sont détectées par l'intermédiaire d'un dispositif de traitement de données (2) d'un utilisateur ;
- transmettre les données d'utilisateur détecté au dispositif de traitement de données (3) du point d'identification de personnes ; et
- démarrer une session en démarrant l'établissement d'une liaison par le dispositif de traitement de données (3) du point d'identification de personnes vers le dispositif de traitement de données (3) du point d'identification de personnes ;
- dans le cadre d'une application d'identification de personnes (21),
- établir un contact entre le dispositif de traitement de données (3) du point d'identification de personnes et le dispositif de traitement de données (4) du centre de confiance ;
- réserver un certificat électronique pour la session dans le dispositif de traitement de données (4) du centre de confiance, dans lequel de cette manière des informations de session électronique sont transmises au dispositif de traitement de données (4) du centre de confiance dans lequel le certificat de la session est affecté individuellement ;
- établir une liaison de vidéoconférence par le dispositif de traitement de données (3) du point d'identification de personnes vers le dispositif de traitement de données (2) de l'utilisateur et effectuer une identification de personnes de l'utilisateur dans le dispositif de traitement de données (3) du point d'identification de personnes dans le cadre d'une vidéoconférence et couper la liaison de vidéoconférence ;
- établir une liaison de communication de données entre le dispositif de traitement de données (3) du point d'identification de personnes et le dispositif de traitement de données (4) du centre de confiance à la suite de l'identification d'une personne ; et
- transmettre les données personnelles identifiant l'utilisateur, générées dans le cadre de l'identification de personnes, via la liaison de communication de données au dispositif de traitement de données (4) du centre de confiance ;
- dans le cadre d'une application de signature (22),
- effectuer un processus de signature électronique, dans lequel dans le dispositif de traitement de données (4) du centre de confiance,
- le certificat électronique est fourni, dans lequel de cette manière le dispositif de traitement de données (4) du centre de confiance génère une paire de clés de signature électronique ainsi qu'un certificat de signature électronique, qui comprend en plus des données personnelles d'identification l'information de session relative à la session en cours ;
- le document est signé électroniquement au moyen du certificat électronique et
- pour le document signé électroniquement une vérification est effectuée ; et
- transmettre le document signé électroniquement et un rapport concernant la vérification au dispositif de traitement de données (1) du fournisseur de services.

2. Procédé selon la revendication 1, **caractérisé en ce que** l'exécution du processus de signature électronique dans le dispositif de traitement de données (4) du centre de confiance présente les étapes suivantes :
- fournir le certificat électronique comme un certificat numérique pour une signature numérique et
- signer numériquement le document avec le certificat numérique.

3. Procédé selon la revendication 1 ou 2, **caractérisé en ce que** les données d'utilisateur sont transmises par le dispositif de traitement de données (1) du fournisseur de services au dispositif de traitement de données (4) du centre de confiance.

4. Procédé selon au moins une des revendications précédentes, **caractérisé en ce que** comme réaction à un appel d'application, l'application d'identification de personnes (21) est appelée à partir de l'application de fournisseur de services (20).

5. Procédé selon au moins une des revendications précédentes, **caractérisé en ce que** comme réaction à un appel d'application, l'application de signature (22) est appelée à partir de l'application de fournisseur de services (20).

6. Procédé selon au moins une des revendications précédentes, **caractérisé en ce que** en réaction à un appel d'application, l'application d'identification de personnes (21) est appelée à partir de l'application de signature (22).

7. Procédé selon au moins une des revendications précédentes, **caractérisé en ce que** comme réaction un appel d'application, l'application de signature (22) est appelée à partir de l'application d'identification de personnes (21).

8. Procédé selon au moins une des revendications précédentes, **caractérisé en ce que** le document à signer électroniquement est émis vers l'utilisateur par l'intermédiaire d'un dispositif d'affichage de traitement de données (2) de l'utilisateur, dans lequel l'émission est déclenchée par l'application de signature (22) et/ou l'application d'identification de personnes (21).

9. Procédé selon au moins une des revendications précédentes, **caractérisé en ce que** dans le cadre de l'application d'identification des personnes (21) des données d'identification sont fournies et transmises à l'application de fournisseur de services (20).

10. Dispositif de signature électronique personnalisée d'un document, comportant un système de dispositif de traitement de données, dans lequel le système présente un dispositif de traitement de données (1) d'un fournisseur de services, un dispositif de traitement de données (2) d'un utilisateur, un dispositif de traitement de données (3) d'un point d'identification de personnes et un dispositif de traitement de données (4) d'un centre de confiance pour signature électronique, dans lequel sur le système de dispositif de traitement de données une application de fournisseur de services (20), une application d'identification de personnes (21) et une application de signature (22) sont implémentées, qui sont conçus afin de mettre en oeuvre un procédé selon une des revendications 1 à 9.

11. Produit de programme informatique, qui présente du code de programme mémorisé sur un support de mémorisation, qui est conçu pour lors du chargement du code de programme dans des dispositifs de traitement de données (1,... ,4) mettre en oeuvre un procédé de signature électronique personnalisée d'un document selon au moins une des revendications 1 à 9.
